# EUROPÄISCHE PATENTSCHRIFT

(11) **EP 4 165 706 B1**
(45) Veröffentlichungstag und Bekanntmachung des Hinweises auf die Patenterteilung: **18.09.2024**
(21) Anmeldenummer: 21799249.4
(22) Anmeldetag: 25.10.2021
(51) Int. Cl.: H01M 8/0273, H01M 8/242, H01M 8/2457, H01M 8/2483, H01M 8/10

(54) **EINZELZELLE UND BRENNSTOFFZELLENSTAPEL MIT ELASTISCHEN STRUKTUREN ZUR GLEICHVERTEILUNG VON BETRIEBSMEDIEN**
INDIVIDUAL CELL AND FUEL CELL STACK HAVING ELASTIC STRUCTURES FOR EVENLY DISTRIBUTING OPERATING MEDIA
PILE INDIVIDUELLE ET EMPILEMENT DE PILES À COMBUSTIBLE AYANT DES STRUCTURES ÉLASTIQUES POUR DISTRIBUER UNIFORMÉMENT DES MILIEUX DE TRAVAIL

(30) Priorität: 30.10.2020 DE 102020128559
(43) Veröffentlichungstag der Anmeldung: 19.04.2023
(73) Patentinhaber: AUDI AG, 85057 Ingolstadt (DE)
(72) Erfinder: KEITSCH, Oliver, 74076 Heilbronn (DE); RIEDE, Nico, 70435 Stuttgart (DE); SIEBEL, Armin, 74172 Neckarsulm (DE); VOIGT, Sebastian, 74074 Heilbronn (DE)
(74) Vertreter: Hentrich Patent- & Rechtsanwaltspartnerschaft mbB
(86) Internationale Anmeldenummer: PCT/EP2021/079487
(87) Internationale Veröffentlichungsnummer: WO 2022/090128

(56) Entgegenhaltungen:
- EP-A1- 3 336 949
- JP-A- 2014 002 920
- US-A1- 2011 165 492

## Beschreibung

Die Erfindung betrifft eine Einzelzelle für einen Brennstoffzellenstapel einer Brennstoffzellenvorrichtung. In einem aktiven Bereich der Einzelzelle ist eine Membran-Elektroden-Anordnung angeordnet, der wenigstens eine Einzelplatte, vorzugsweise aber Bipolarplatte aus zwei miteinander verbundenen Einzelplatten zugeordnet ist. Die Einzelplatte ist dabei mit einem Flussfeld zur Zuführung eines Betriebsmediums in den aktiven Bereich der Membran-Elektroden-Anordnung gebildet, welches seinerseits strömungsmechanisch mit einem abseits des aktiven Bereichs vorhandenen Medienport verbunden ist. Eine Vielzahl von übereinander gestapelten und fluchtend zueinander ausgerichteten Medienports bilden dabei einen Hauptkanal für die Betriebsmedien, insbesondere das Kathodengas, den Brennstoff oder das Kühlmittel aus. Die Erfindung betrifft ferner einen Brennstoffzellenstapel mit einer Mehrzahl an übereinander gestapelten Einzelzellen.

Brennstoffzellenvorrichtungen werden für die chemische Umsetzung eines Brennstoffs mit Sauerstoff zu Wasser genutzt, um elektrische Energie zu erzeugen. Hierfür enthalten Brennstoffzellen als Kernkomponente die sogenannte Membran-Elektroden-Einheit (MEA für membrane electrode assembly), die ein Verbund aus einer protonenleitenden Membran und jeweils einer, beidseitig an der Membran angeordneten Elektrode (Anode und Kathode) ist. Zudem können Gasdiffusionslagen (GDL) beidseitig der Membran-Elektroden-Einheit an den der Membran abgewandten Seiten der Elektroden angeordnet sein. Im Betrieb der Brennstoffzellenvorrichtung mit einer Mehrzahl zu einem Brennstoffzellenstapel zusammengefasster Brennstoffzellen wird der Brennstoff, insbesondere Wasserstoff H₂ oder ein wasserstoffhaltiges Gasgemisch der Anode zugeführt, wo eine elektrochemische Oxidation von H₂ zu H⁺ unter Abgabe von Elektronen stattfindet. Über den Elektrolyten oder die Membran, welche die Reaktionsräume gasdicht voneinander trennt und elektrisch isoliert, erfolgt ein Transport der Protonen H⁺ aus dem Anodenraum in den Kathodenraum. Die an der Anode bereitgestellten Elektronen werden über eine elektrische Leitung der Kathode zugeleitet. Der Kathode wird Sauerstoff oder ein sauerstoffhaltiges Gasgemisch zugeführt, so dass eine Reduktion von O₂ zu O²⁻ unter Aufnahme der Elektronen stattfindet. Gleichzeitig reagieren im Kathodenraum diese Sauerstoffanionen mit den über die Membran transportierten Protonen unter Bildung von Wasser.

Den Elektroden der Brennstoffzellen werden mittels Bipolarplatten die Reaktantengase zugeführt. Zusätzlich zu den Reaktantengasen wird aufgrund der bei der Brennstoffzellenreaktion erzeugten Wärme auch ein Kühlmedium durch die Bipolarplatten durchgeführt, so dass auf kleinstem Raum drei verschiedene Medien durch die Bipolarplatten geführt werden.

Bei der Versorgung der Brennstoffzellen mit den Reaktanten werden diese über Hauptkanäle (Ports) in die Bipolarplatten geleitet, die eine Verteilung der Reaktanten in einen aktiven Bereich bewirken soll, um mittels eines Flussfeldes die gesamte Fläche der Elektroden möglichst gleichmäßig zu versorgen. Da in dem Brennstoffzellenstapel mehrere Bipolarplatten mit den Membran-Elektroden-Einheiten gestapelt sind, werden Dichtungen eingesetzt, die die Hauptkanäle längs durch den Brennstoffzellenstapel abdichten. Zusätzlich muss eine gute Abdichtung gegenüber dem in Kühlmittelkanälen strömenden Kühlmedium erfolgen.

Um eine Gleichverteilung der in den Stapel eingeleiteten Betriebsmedien hervorzurufen, schlagen die DE 10 2017 202 705 A1, die DE 10 2014 220 682 A1 und die DE 10 2017 211 755 A1 den Einsatz von Einlege- oder Einsteckelementen in den Hauptkanäle vor, welche den nutzbaren Strömungsquerschnitt über die Längserstreckung des jeweiligen Hauptkanals verändern. Auf diese Weise lässt sich eine gleichmäßige Druck- und damit Strömungsverteilung der Betriebsmedien erzielen. Durch die Verwendung der Einlege- oder Einsteckelemente lassen sich die Bipolarplatten mit denselben Abmessungen bilden, so dass die Anzahl an Gleichteilen erhöht ist, was zu einer Kostensenkung führt.

Es besteht aber alternativ die Möglichkeit, dass die Medienports der Bipolarplatten mit unterschiedlichen Strömungsquerschnitten gestaltet sind, wobei beispielsweise der Strömungsquerschnitt der Austritts-Hauptkanäle größer gewählt ist als es der Strömungsquerschnitt der Eintritts-Hauptkanäle ist. Der auslassseitig größere Querschnitt verlangsamt die Strömungsgeschwindigkeit und erhöht den Druck im Austritt, was die Gleichverteilung beeinflusst. Aufgrund der dabei entstehenden Asymmetrie der Einzelzellen, wird viel Bauraum für den so gebildeten Brennstoffzellenstapel benötigt, wobei auch die Verspannung der Einzelzellen zum Brennstoffzellenstapel einer asymmetrischen Kraftverteilung unterliegt, die auszugleichen ist.

JP 2014 002920 A beschreibt einen Brennstoffzellenstapel mit einem Abgassammelkanal in welchen den Strömungsquerschnitt des Kanals teilweise überdeckende Lamellen hineinragen. Die Lamellen dienen der Wasserkontrolle.

US 2011/165492 A1 beschreibt einen Brennstoffzellenstapel, bei dem ein Keil in einem Fluidverteilerkanal eingeschoben ist, um den Querschnitt des Kanals längs der Strömungsrichtung zu verringern und dadurch den Fluidverlust in Strömungsrichtung zu kompensieren.

EP 3 336 949 A1 beschreibt einen Brennstoffzellenstapel, bei dem ein Einlegeelement in einen Luftverteilenkanal eingelegt wird. Das Einlegeelement weist Öffnungen auf, durch die die Luft zu den einzelnen Brennstoffzellen gelangt. Diese Öffnungen weisen unterschiedliche Querschnitte auf, um die Luftmenge spezifisch an die einzelnen Brennstoffzellen anzupassen.

Es ist die Aufgabe der vorliegenden Erfindung, eine Einzelzelle und einen Brennstoffzellenstapel bereitzustellen, die wenigstens einem der vorstehenden genannten Nachteilen Rechnung tragen.

Diese Aufgabe wird mit einer Einzelzelle mit den Merkmalen des Anspruchs 1 und durch einen Brennstoffzellenstapel mit den Merkmalen des Anspruchs 9 gelöst. Vorteilhafte Ausgestaltungen mit zweckmäßigen Weiterbildungen der Erfindung sind in den abhängigen Ansprüchen angegeben.

Die erfindungsgemäße Bipolarplatte zeichnet sich insbesondere dadurch aus, dass lateral bezüglich der Membran-Elektroden-Anordnung eine den Strömungsquerschnitt des Medienports wenigstens teilweise überdeckende Lamelle vorhanden ist, die zur Veränderung des nutzbaren Strömungsquerschnitts des Medienports durch die Kraft eines axial durch den Medienport strömenden Reaktionsmediums elastisch biegbar oder elastisch nachgiebig gebildet ist. Auf diese Weise ergibt sich eine Optimierung der Gleichverteilung mittels einer Mehrzahl an sich biegender oder umklappender Lamellen entlang des betreffenden Hauptkanals, der durch die fluchtend gestapelte Anordnung der Medienports der Einzelzellen entsteht.

Es ist bevorzugt, wenn unterschiedliche - insbesondere diskrete - Zustände für die Lamelle gegeben sind, die den nutzbaren Strömungsquerschnitt des Medienports einstellt. Deshalb ist es von Vorteil, wenn die Lamelle in Abhängigkeit der auf sie einwirkenden Kraft des strömenden Betriebsmediums verstellbar ist zwischen einer umgeklappten Konfiguration, in der ein vergrößerter nutzbarer Strömungsquerschnitt des Medienports vorliegt, und einer auslenkungsfreien Konfiguration, in welcher ein gegenüber dem vergrößerten nutzbaren Strömungsquerschnitt verringerter nutzbarer Strömungsquerschnitt des Medienports vorliegt.

Um die axiale Ausdehnung des Brennstoffzellenstapels gering zu halten ist es von Vorteil, wenn die Membran-Elektroden-Anordnung der Einzelzelle in eine isolierende Lage eingefasst ist, und wenn die Lamelle einen Teil dieser isolierenden Lage bildet.

Dabei ist die Möglichkeit gegeben, dass die isolierende Lage ein die Membran-Elektroden-Anordnung umgebender Rahmen und/oder eine die Membran-Elektroden-Anordnung umgebende Dichtungslage (z.B. sog. "Sub-Gasket" oder RIM) ist. Diese Bauteile sind bei einer Brennstoffzelle ohnehin vorhanden, so dass durch den zusätzlichen Einsatz einer Lamelle zur Beeinflussung des nutzbaren Strömungsquerschnitts des Hauptkanals oder des Medienports keine weiteren Konstituenten oder Bauteile vorzusehen sind.

Die Lamelle lässt sich auf einfache Weise bilden, wenn wenigstens ein einseitig offener Schlitz in den Teil der isolierenden Lage eingebracht wird, der in den nutzbaren Strömungsquerschnitt des Medienports ragt. Bei nur einem einzigen offenen Schlitz lassen sich beispielsweise zwei in den Medienport ragende Halblamellen erzeugen.

Es ist aber bevorzugt, dass zwei zueinander parallel verlaufende einseitig offene Schlitze in den Teil der isolierenden Lage eingebracht sind, der in den nutzbaren Strömungsquerschnitt des Medienports ragt, denn auf diese Weise wird ein "Umklappen" der Lamellen durch die Kraft des strömenden Betriebsmediums begünstigt.

Um den nutzbaren Strömungsquerschnitt gezielt einstellen zu können, hat es sich als vorteilhaft erwiesen, wenn die Lamelle einen konkaven Abschnitt umfasst, der in den nutzbaren Strömungsquerschnitt des Medienports ragt. Die Ausbildung eines in den Strömungsquerschnitt ragenden konvexen Abschnitts ist ebenfalls möglich. Der Einsatz von anderen Geometrien, die die Gleichverteilung über den Stapel begünstigen, ist ebenfalls möglich.

Um die Anzahl an Gleichteilen beim Brennstoffzellenstapel zu erhöhen, hat es sich als vorteilhaft erwiesen, wenn das Flussfeld der Einzelplatte oder der Bipolarplatte strömungsmechanisch mit einlassseitigen Medienport und strömungsmechanisch mit einem auslassseitigen Medienport verbunden ist, und wenn der einlassseitige und der auslassseitige Medienport mit denselben Abmessungen gebildet sind. Auf diese Weise lassen sich hochsymmetrische Einzelzellen herstellen, bei denen vorzugsweise auch eine Mehrzahl, insbesondere alle der vorhandenen Lamellen mit denselben Abmessungen gebildet sind.

Die in Verbindung mit der erfindungsgemäßen Einzelzelle erläuterten Vorteile, vorteilhafte Ausgestaltungen und Wirkungen, gelten in gleichem Maße für den erfindungsgemäßen Brennstoffzellenstapel, der mit einer Mehrzahl an solchen Einzelzellen gebildet ist, bei denen die Medienports fluchtend zueinander ausgerichtet sind. Auch er zeichnet sich durch eine verbesserte Gleichverteilung der Betriebsmedien über die von den Medienports gebildeten Hauptkanäle aus.

Dabei ist die Möglichkeit vorhanden, dass die Lamellen der Einzelzellen derart dimensioniert sind, dass die Lamelle einer ersten Einzelzelle bei einem kraftinduzierten Umklappen an der Lamelle der zur ersten Einzelzelle benachbart gestapelten Einzelzelle abgestützt ist. Auf diese Weise stützen sich also die Lamellen gegenseitig aneinander ab, wobei mit zunehmenden Abstand vom Medienanschluss in Strömungsrichtung des Betriebsmediums eine zunehmende Aufhäufung der Lamellen vorliegt. Durch diese Aufhäufung der Lamellen wird der Strömungsquerschnitt zunehmend verengt, was einen positiven Effekt auf die Gleichverteilung mit sich bringt. Gleichzeitig lässt sich durch eine solche Konfiguration eine zusätzliche laterale Abdichtung durch die sich überlappenden Lamellen erzielen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine schematische Darstellung eines eine Mehrzahl von Brennstoffzellen aufweisenden Brennstoffzellenstapels mit den die Hauptkanälen zeigenden Einzelzellen,
- Fig. 2: eine schematische Detaildarstellung des Schnitts II-II durch den aktiven Bereich des Brennstoffzellenstapels aus Figur 1,
- Fig. 3: eine schematische Detaildraufsicht auf einen einlassseitigen Medienport einer der Einzelzellen, in welcher die Pfeile den Medienstrom beziehungsweise die Medienführung illustrieren,
- Fig. 4: eine schematische Detaildraufsicht auf einen weiteren einlassseitigen Medienport einer der Einzelzellen, in welcher die Pfeile den Medienstrom beziehungsweise die Medienführung illustrieren,
- Fig. 5: eine schematische Detaildraufsicht auf einen weiteren einlassseitigen Medienport einer der Einzelzellen, in welcher die Pfeile den Medienstrom beziehungsweise die Medienführung illustrieren,
- Fig. 6: eine schematische Detaildraufsicht auf einen weiteren einlassseitigen Medienport einer der Einzelzellen, in welcher die Pfeile den Medienstrom beziehungsweise die Medienführung illustrieren,
- Fig. 7: eine schematische Detail-Schnittansicht durch einen Brennstoffzellenstapel im Bereich des Hauptkanals, und
- Fig. 8: eine weitere schematische Detail-Schnittansicht durch einen Brennstoffzellenstapel im Bereich des Hauptkanals.

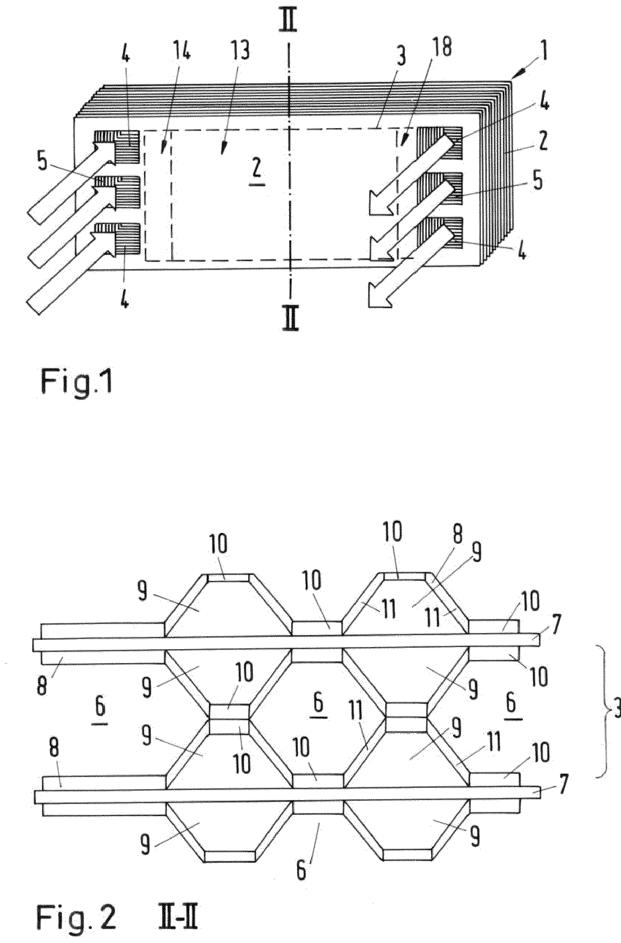

Ein in Figur 1 gezeigter Brennstoffzellenstapel 1 besteht aus einer Mehrzahl von in Reihe geschalteter Brennstoffzellen 2. Jede der Brennstoffzellen 2 umfasst eine Anode und eine Kathode sowie eine die Anode von der Kathode trennende protonenleitfähige Membran. Die beiden Elektroden zusammen mit der Membran bilden eine Membran-Elektroden-Anordnung 7 (kurz: MEA). Die Membran ist aus einem lonomer, vorzugsweise einem sulfonierten Tetrafluorethylen-Polymer (PTFE) oder einem Polymer der perfluorierten Sulfonsäure (PFSA) gebildet. Alternativ kann die Membran als eine sulfonierte Hydrocarbon-Membran gebildet sein.

Über Anodenräume innerhalb des Brennstoffzellenstapels 1 wird den Anoden Brennstoff (zum Beispiel Wasserstoff) zugeführt. In einer Polymerelektrolytmembranbrennstoffzelle (PEM-Brennstoffzelle) werden an der Anode Brennstoff oder Brennstoffmoleküle in Protonen und Elektronen aufgespaltet. Die Membran lässt die Protonen (zum Beispiel H⁺) hindurch, ist aber undurchlässig für die Elektronen (e-). An der Anode erfolgt dabei die folgende Reaktion: 2H₂ → 4H⁺ + 4e⁻ (Oxidation/Elektronenabgabe). Während die Protonen durch die Membran zur Kathode hindurchtreten, werden die Elektronen über einen externen Stromkreis an die Kathode oder an einen Energiespeicher geleitet. Über Kathodenräume innerhalb des Brennstoffzellenstapels 1 kann den Kathoden Kathodengas (zum Beispiel Sauerstoff oder Sauerstoff enthaltende Luft) zugeführt werden, so dass kathodenseitig die folgende Reaktion stattfindet: O₂ + 4H⁺ + 4e⁻ → 2H₂O (Reduktion/Elektronenaufnahme).

Dem Brennstoffzellenstapel 1 wird über eine Kathodenfrischgasleitung durch einen Verdichter komprimierte Luft zugeführt wird. Zusätzlich ist der Brennstoffzellenstapel 1 mit einer Kathodenabgasleitung verbunden. Anodenseitig wird dem Brennstoffzellenstapel 1 in einem Wasserstofftank bereitgehaltener Wasserstoff über eine Anodenfrischgasleitung zugeführt zur Bereitstellung der für die elektrochemische Reaktion in einer Brennstoffzelle 2 erforderlichen Reaktanten. Diese Gase werden an Bipolarplatten 3 übergeben, die für die Verteilung der Gase an die Membran und der Ausleitung Hauptkanäle aus Medienports 4 aufweisen. Zusätzlich weisen die Bipolarplatten Hauptkühlmittelkanäle aus Medienports 5 für die Durchleitung eines Kühlmediums in einem Kühlmittelkanal 6 auf, so dass auf kleinstem Raum drei verschiedene Medien geführt werden. In Figur 1 sind also auch die jeweils zu Paaren zusammengefassten Hauptkanäle 4, 5 einer Mehrzahl den Brennstoffzellenstapel 1 bildenden Brennstoffzellen 2 mit Bipolarplatten 3 gezeigt. Die Membran-Elektroden-Anordnung 7 bildet zusammen mit der ihr zugehörigen Bipolarplatte 3 eine Einzelzelle des Brennstoffzellenstapels 1.

Ein Detailausschnitt des Brennstoffzellenstapels 1 entlang des Schnittes II-II aus Figur 1 ist in Figur 2 gezeigt. Dieser Schnitt verläuft durch den aktiven Bereich 13 des Brennstoffzellenstapels 1. Der aktive Bereich 13 der Bipolarplatte 3 ist dabei selbstverständlich selbst nicht elektrochemisch aktiv, aber er ist zu denjenigen Konstituenten der Brennstoffzelle 2 benachbart angeordnet, bei welchen die elektrochemische Brennstoffzellenreaktion erfolgt, nämlich an oder über die Membran-Elektroden-Anordnung 7. Es ist zu erkennen, dass die Bipolarplatte 3 in diesem aktiven Bereich 13 auf ihren voneinander wegweisenden Oberflächen die Reaktantenflussfelder aufweist, die sich gegenüberliegend angeordnet sind und damit eine gegenüberliegende Konfiguration ausbilden. Die Reaktantenflussfelder weisen jeweils eine Mehrzahl von durch Wandungen 11 von Stegen 10 begrenzten Strömungskanälen 9 für das jeweilige Reaktionsmedium auf. Die Stege 10 und die Strömungskanäle 9 der Einen der Einzelplatten 8 sind in diesem aktiven Bereich 13 also gegenüberliegend zu den Stegen 10 und den Strömungskanälen 9 der Anderen der Einzelplatten 8 verlaufend gestaltet. Auf diese Weise werden Kühlmittelkanäle 6 eines sich zwischen den Einzelplatten 8 erstreckenden Kühlmittelflussfelds gebildet.

Es ist erforderlich, die Betriebsmedien möglichst gleichmäßig in den aktiven Bereich 13 der Bipolarplatte 3 verteilt einzuleiten, weshalb es bekannt ist, zwischen den die Hauptkanäle bildenden Medienports 4, 5 und dem aktiven Bereich 13 einen Verteilbereich 14 mit einem Kanäle umfassenden Verteilerfeld einzubringen. Die Kanäle sind weisen hierzu geeignete Verzweigungen für die Führung der Betriebsmedien auf. Stromab des aktiven Bereichs 3, also stromab des jeweiligen Flussfelds werden die Medienteilströme wieder in einem Sammelbereich 18 gesammelt und über den auslassseitigen Medienport 4, 5 ausgeleitet.

Um über die Hauptkanäle hinweg eine gleichmäßige Anströmung durch die Betriebsmedien zu erzielen, sehen - zumindest die einlassseitigen - Medienports 4, 5 den Einsatz wenigstens einer Lamelle 12 vor. Diese ist lateral oder seitlich bezüglich der Membran-Elektroden-Anordnung 7 angeordnet vorhanden, und überdeckt den nutzbaren Strömungsquerschnitt des Medienports 4, 5 wenigstens teilweise. Die Lamelle 12 ist zur Veränderung des nutzbaren Strömungsquerschnitts des Medienports 4, 5 durch die Kraft eines axial durch den Medienport 4, 5 strömenden Reaktionsmediums elastisch biegbar oder elastisch nachgiebig gebildet.

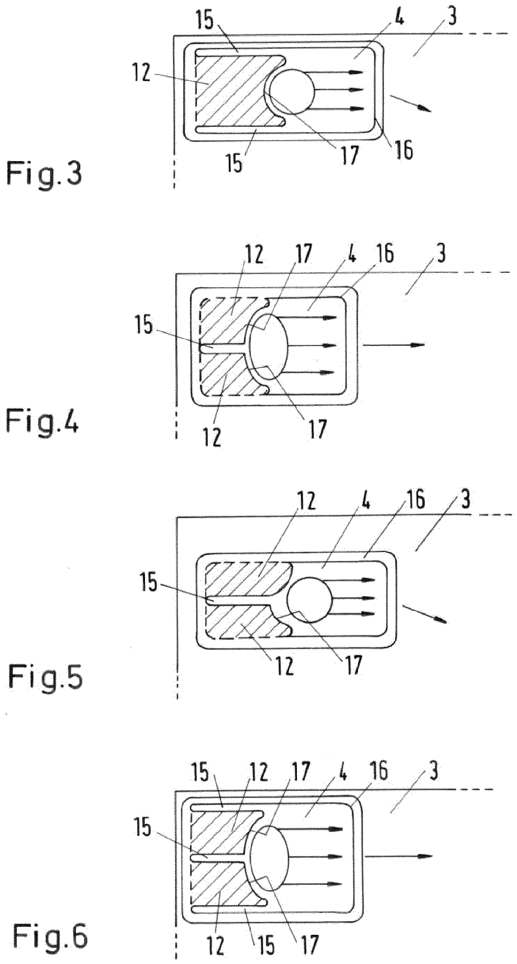

Die Detailansichten auf den oben links gezeigten Medienport 4 des Brennstoffzellenstapels 1 aus Figur 1 ist den Figuren 3 bis 6 zu entnehmen. Hierbei ist die Membran-Elektroden-Anordnung 7 in eine isolierende Lage, vorliegend in einen Rahmen 16 eingefasst, wobei die Lamelle 12 einen Teil des Rahmens 16 bildet. Sie könnte auch Teil einer Dichtungsstruktur ("Sub-Gasket" / RIM) sein.

In der Gestaltung nach Figur 3 sind in den Rahmen zwei zueinander parallel verlaufende, einseitig offene Schlitze 15 in den Teil eingebracht sind, der in den nutzbaren Strömungsquerschnitt des Medienports 4, 5 ragt. Durch diese beiden Schlitze 15 wird die Lamelle 12 gebildet, die in die Papierebene hinein bzw. aus dieser heraus elastisch biegbar, insbesondere umklappbar ist. Es ist zu erkennen, dass die Lamelle 12 mit einem konkaven Abschnitt 17 versehen ist, der in den nutzbaren Strömungsquerschnitt des Medienports 4, 5 ragt, und der der Herstellung des gewünschten Strömungswiderstandes dient. Eine andere Formgebung zur Herstellung eines anderen gewünschten Strömungswiderstands ist ebenfalls möglich.

In der Gestaltung nach Figur 4 liegt genau ein Schlitz 15 vor, der vorliegend zentral bezüglich der Medienportmitte ausgerichtet ist, sodass linksseitig und rechtsseitig zwei kleinere (Teil-)Lamellen 12 gebildet sind. Auch hier ist die Möglichkeit gezeigt, dass die beiden Lamellen 12 mit einem konkaven Abschnitt 17 versehen sind, der in den nutzbaren Strömungsquerschnitt des Medienports 4, 5 ragt. Die Gestaltung der Lamellen 12 nach Figur 5 entspricht der Gestaltung der Lamellen 12 nach Figur 4, mit der Ausnahme, dass die in der Zeichnung obere Lamelle 12 keinen konkaven Abschnitt 17 besitzt. Vielmehr ist sie mit einer eher konvexen Formgebung versehen.

In Figur 6 ist eine Gestaltung der Lamellen 12 gezeigt, die - wie in der Gestaltung nach Figur 3 gezeigt - durch zwei seitliche Schlitze 15 sowie durch - wie in der Gestaltung nach Figur 4 gezeigt - durch einen zentralen Schlitz 15 gebildet sind. Auch hier liegen konkave Abschnitte 17 an den beiden Lamellen 12 vor.

In Abhängigkeit der vorliegenden Randbedingungen kann der Anteil von Überdeckung durch die Lamelle 12 zu lamellenfreiem, ausgeschnittenem Medienport 4, 5 gezielt variiert und eingestellt werden, um für den jeweiligen Brennstoffzellenstapel 1 die Gleichverteilung zu optimieren. Die Abmessungen und die Formgebung der Lamellen 12 wird dabei gezielt auf die Materialstärke der isolierenden und mechanische Eigenschaften des Frames (Rahmen der MEA) angepasst werden.

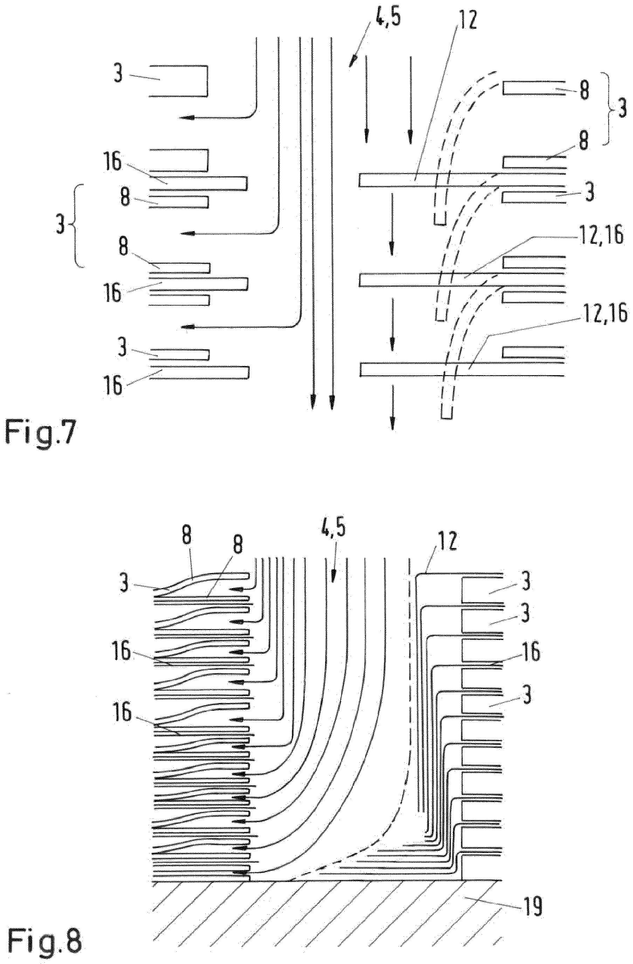

In der Detail-Schnittansicht nach Figur 7 durch einen Brennstoffzellenstapel 1, der durch eine Mehrzahl solcher übereinander gestapelter Einzelzellen gebildet ist, ist zu entnehmen, dass die Medienports 4, 5 fluchtend zur Bildung der Hauptkanäle ausgerichtet werden. Dabei ragen die Lamellen 12 im nicht angeströmten Zustand im Bild horizontal in die durch die Medienports 4, 5 gebildeten Hauptkanäle. Werden die Lamellen 12 von einem Betriebsmedium angeströmt, so biegen sich diese elastisch, was durch die strichlierte Darstellung illustriert ist. Es ist bevorzugt, wenn die Lamellen 12 in Abhängigkeit der auf sie einwirkenden Kraft des strömenden Betriebsmediums verstellbar sind zwischen einer umgeklappten Konfiguration, in der ein vergrößerter nutzbarer Strömungsquerschnitt des Medienports 4, 5 vorliegt, und einer auslenkungsfreien Konfiguration, in welcher ein gegenüber dem vergrößerten nutzbaren Strömungsquerschnitt verringerter nutzbarer Strömungsquerschnitt des Medienports 4, 5 vorliegt.

Die Schnittansicht nach Figur 8 zeigt, dass die Lamellen 12 der Einzelzellen dabei derart dimensioniert sind, dass die Lamelle 12 einer ersten Einzelzelle bei einem kraftinduzierten Umklappen an der Lamelle 12 der zur ersten Einzelzelle benachbart gestapelten Einzelzelle abgestützt ist. Auf diese Weise stützen sich also die Lamellen 12 gegenseitig aneinander ab, wobei mit zunehmenden Abstand vom Medienanschluss in Strömungsrichtung des Betriebsmediums eine zunehmende Aufhäufung der Lamellen 12 vorliegt. Durch diese Aufhäufung der Lamellen 12 wird der nutzbare Strömungsquerschnitt des Hauptkanals zunehmend verengt, was die Gleichverteilung des strömenden Betriebsmediums begünstigt. Gleichzeitig lässt sich durch eine solche Konfiguration eine zusätzliche laterale Abdichtung durch die sich überlappenden Lamellen 12 erzielen. Die Lamellen 12 haben vorliegend identische Abmessungen. Eine gezielte, über den Stapel veränderliche, Abmessung für die Lamellen 12 ist ebenfalls denkbar.

Im Ergebnis ist mit der vorliegenden Erfindung also eine Gleichverteilung der Medienströme bereits im Hauptkanal gegeben, so dass eine verbesserte Medienverteilung über die gesamte Bipolarplatte 3, über die gesamte Einzelzelle und damit über den gesamten Brennstoffzellenstapel 1 vorliegt.

### BEZUGSZEICHENLISTE:

- 1: Brennstoffzellenstapel
- 2: Brennstoffzelle
- 3: Bipolarplatte
- 4: Hauptkanal für Reaktanten / Medienport
- 5: Hauptkühlmittelkanal für Kühlmedium / Medienport
- 6: Kühlmittelkanal
- 7: Membran-Elektroden-Anordnung (MEA)
- 8: Einzelplatte
- 9: Strömungskanal
- 10: Steg
- 11: Wandung
- 12: Lamelle
- 13: Aktiver Bereich
- 14: Verteilbereich
- 15: Schlitz
- 16: Rahmen
- 17: Konkaver Abschnitt (Lamelle)
- 18: Sammelbereich
- 19: Endplatte

## Patentansprüche

1. Einzelzelle für einen Brennstoffzellenstapel (1), mit einer in einem aktiven Bereich (13) angeordneten Membran-Elektroden-Anordnung (7), der wenigstens eine Einzelplatte (8) zugeordnet ist, die mit einem Flussfeld zur Zuführung eines Betriebsmediums in den aktiven Bereich (13) der Membran-Elektroden-Anordnung (7) gebildet ist, das strömungsmechanisch mit einem abseits des aktiven Bereichs (13) vorhandenen Medienport (4, 5) verbunden ist, **dadurch gekennzeichnet, dass** lateral bezüglich der Membran-Elektroden-Anordnung (7) eine den Strömungsquerschnitt des Medienports (4, 5) wenigstens teilweise überdeckende Lamelle (12) vorhanden ist, die zur Veränderung des nutzbaren Strömungsquerschnitts des Medienports (4, 5) durch die Kraft eines axial durch den Medienport (4, 5) strömenden Reaktionsmediums elastisch biegbar gebildet ist.

2. Einzelzelle nach Anspruch 1, **dadurch gekennzeichnet, dass** die Lamelle (12) in Abhängigkeit der auf sie einwirkenden Kraft des strömenden Betriebsmediums verstellbar ist zwischen einer umgeklappten Konfiguration, in der ein vergrößerter nutzbarer Strömungsquerschnitt des Medienports (4, 5) vorliegt, und einer auslenkungsfreien Konfiguration, in welcher ein gegenüber dem vergrößerten nutzbaren Strömungsquerschnitt verringerter nutzbarer Strömungsquerschnitt des Medienports (4, 5) vorliegt.

3. Einzelzelle nach Anspruch 1 oder 2, **dadurch gekennzeichnet, dass** die Membran-Elektroden-Anordnung (7) in eine isolierende Lage eingefasst ist, und dass die Lamelle (12) einen Teil der isolierenden Lage bildet.

4. Einzelzelle nach Anspruch 3, **dadurch gekennzeichnet, dass** die isolierende Lage ein die Membran-Elektroden-Anordnung (7) umgebender Rahmen (16) und/oder eine die Membran-Elektroden-Anordnung (7) umgebende Dichtungslage.

5. Einzelzelle nach Anspruch 3 oder 4, **dadurch gekennzeichnet, dass** zur Bildung der Lamelle (12) wenigstens ein einseitig offener Schlitz (15) in den Teil der isolierenden Lage eingebracht, der in den nutzbaren Strömungsquerschnitt des Medienports (4, 5) ragt.

6. Einzelzelle nach Anspruch 5, **dadurch gekennzeichnet, dass** zwei zueinander parallel verlaufende einseitig offene Schlitze (15) in den Teil der isolierenden Lage eingebracht sind, der in den nutzbaren Strömungsquerschnitt des Medienports (4, 5) ragt.

7. Einzelzelle nach einem der Ansprüche 1 bis 6, **dadurch gekennzeichnet, dass** die Lamelle (12) einen konkaven Abschnitt (17) umfasst, der in den nutzbaren Strömungsquerschnitt des Medienports (4, 5) ragt.

8. Einzelzelle nach einem der Ansprüche 1 bis 7, **dadurch gekennzeichnet, dass** das Flussfeld strömungsmechanisch mit einlassseitigen Medienport (4, 5) und strömungsmechanisch mit einem auslassseitigen Medienport (4, 5) verbunden ist, wobei der einlassseitige und der auslassseitige Medienport (4, 5) mit denselben Abmessungen gebildet sind.

9. Brennstoffzellenstapel (1) umfassend eine Mehrzahl an Einzelzellen nach einem der Ansprüche 1 bis 8, bei denen die Medienports (4, 5) fluchtend zueinander ausgerichtet sind.

10. Brennstoffzellenstapel (1) nach Anspruch 9, **dadurch gekennzeichnet, dass** die Lamellen (12) der Einzelzellen derart dimensioniert sind, dass die Lamelle (12) einer ersten Einzelzelle bei einem kraftinduzierten Umklappen an der Lamelle (12) der zur ersten Einzelzelle benachbart gestapelten Einzelzelle abgestützt ist.

## Claims

1. A single cell for a fuel cell stack (1), having a membrane electrode arrangement (7) which is arranged in an active region (13) and is as-signed at least one individual plate (8) which is formed with a flow field for supplying an reaction medium into the active region (13) of the membrane electrode arrangement (7), which flow field is fluidically connected to a media port (4, 5), **characterized in that** laterally with respect to the membrane electrode arrangement (7) there is a lamella (12) which at least partially covers the flow cross-section of the media port (4, 5) and which is formed so as to be elastically bendable for changing the usable flow cross-section of the media port (4, 5) by the force of a reaction medium flowing axially through the media port (4, 5).

2. The single cell according to claim 1, **characterized in that** the lamella (12) can be adjusted as a function of the force of the flowing reaction medium acting on it between a folded configuration, in which there is an enlarged usable flow cross-section of the media port (4, 5), and a deflection-free configuration, in which there is a usable flow cross-section of the media port (4, 5) which is reduced in comparison with the enlarged usable flow cross-section.

3. The single cell according to claim 1 or 2, **characterized in that** the membrane-electrode arrangement (7) is enclosed in an insulating lay-er, and **in that** the lamella (12) forms part of the insulating layer.

4. The single cell according to claim 3, **characterized in that** the insulating layer is a frame (16) surrounding the membrane electrode arrangement (7) and/or a sealing layer surrounding the membrane electrode arrangement (7).

5. The single cell according to claim 3 or 4, **characterized in that**, to form the lamella (12), at least one slot (15) open on one side is made **in that** part of the insulating layer which projects into the usable flow cross-section of the media port (4, 5).

6. The single cell according to claim 5, **characterized in that** two slots (15) open on one side and running parallel to one another are made in the part of the insulating layer which projects into the usable flow cross-section of the media port (4, 5).

7. The single cell according to any one of claims 1 to 6, **characterized in that** the lamella (12) comprises a concave section (17) which projects into the usable flow cross-section of the media port (4, 5).

8. The single cell according to any one of claims 1 to 7, **characterized in that** the flow field is fluidically connected to inlet-side media port (4, 5) and fluidically connected to an outlet-side media port (4, 5), the inlet-side and outlet-side media ports (4, 5) being formed with the same dimensions.

9. A fuel cell stack (1) comprising a plurality of single cells according to any one of claims 1 to 8, in which the media ports (4, 5) are aligned with one another.

10. The fuel cell stack (1) according to claim 9, **characterized in that** the lamellas (12) of the single cells are dimensioned in such a way that the lamellas (12) of a first individual cell is supported on the lamellas (12) of the individual cell stacked adjacent to the first single cell in the event of force-induced folding over.

## Revendications

1. Pile individuelle pour un empilement de piles à combustible (1), avec un agencement membrane-électrodes (7) disposé dans une zone active (13), auquel au moins une plaque individuelle (8) est associée, qui est formée avec un champ d'écoulement pour l'apport d'un fluide de fonctionnement dans la zone active (13) de l'agencement membrane-électrodes (7), qui est connecté par mécanique des fluides à un orifice de fluide (4, 5) présent à l'écart de la zone active (13), **caractérisée en ce qu'**une lamelle (12) est présente latéralement par rapport à l'agencement membrane-électrodes (7), recouvrant au moins partiellement la section transversale d'écoulement de l'orifice de fluide (4, 5), qui est formée élastiquement de manière pliable pour modifier la section transversale d'écoulement utile de l'orifice de fluide (4, 5) par la force d'un fluide de réaction s'écoulant axialement à travers l'orifice de fluide (4, 5).

2. Pile individuelle selon la revendication 1, **caractérisée en ce que** la lamelle (12) peut être déplacée en fonction de la force exercée sur elle par le fluide de fonctionnement s'écoulant entre une configuration rabattue, dans laquelle une section transversale d'écoulement utile agrandie de l'orifice de fluide (4, 5) est présente, et une configuration sans déviation, dans laquelle une section transversale d'écoulement utile de l'orifice de fluide (4, 5) réduite par rapport à la section transversale d'écoulement utile agrandie est présente.

3. Pile individuelle selon la revendication 1 ou 2, **caractérisée en ce que** l'agencement membrane-électrodes (7) est entouré d'une couche isolante, et **en ce que** la lamelle (12) forme une partie de la couche isolante.

4. Pile individuelle selon la revendication 3, **caractérisée en ce que** la couche isolante est un cadre (16) entourant l'agencement membrane-électrodes (7) et/ou une couche d'étanchéité entourant l'agencement membrane-électrodes (7).

5. Pile individuelle selon la revendication 3 ou 4, **caractérisée en ce que**, pour former la lamelle (12), au moins une fente (15) ouverte d'un côté est pratiquée dans la partie de la couche isolante qui fait saillie dans la section transversale d'écoulement utile de l'orifice de fluide (4, 5).

6. Pile individuelle selon la revendication 5, **caractérisée en ce que** deux fentes (15) ouvertes d'un côté et parallèles entre elles sont pratiquées dans la partie de la couche isolante qui fait saillie dans la section transversale d'écoulement utile de l'orifice de fluide (4, 5).

7. Pile individuelle selon l'une quelconque des revendications 1 à 6, **caractérisée en ce que** la lamelle (12) comprend une section concave (17) qui fait saillie dans la section transversale d'écoulement utile de l'orifice de fluide (4, 5).

8. Pile individuelle selon l'une quelconque des revendications 1 à 7, **caractérisée en ce que** le champ d'écoulement est connecté par mécanique des fluides à des orifices de fluide côté entrée (4, 5) et par mécanique des fluides à un orifice de fluide côté sortie (4, 5), dans laquelle les orifices de fluide côté entrée et côté sortie (4, 5) sont formés avec les mêmes dimensions.

9. Empilement de piles à combustible (1) comprenant une pluralité de piles individuelles selon l'une quelconque des revendications 1 à 8, dans lequel les orifices de fluide (4, 5) sont orientés les uns aux autres.

10. Empilement de piles à combustible (1) selon la revendication 9, **caractérisé en ce que** les lamelles (12) des piles individuelles sont dimensionnées de sorte que la lamelle (12) d'une première pile individuelle s'appuie, lors d'un rabattement induit par une force, sur la lamelle (12) de la pile individuelle empilée à proximité de la première pile individuelle.
